# FASCICULE DE BREVET EUROPEEN

(11) **EP 3 094 981 B1**
(45) Date de publication et mention de la délivrance du brevet: **28.11.2018**
(21) Numéro de dépôt: 15700593.5
(22) Date de dépôt: 19.01.2015
(51) Int. Cl.: G01P 15/08, G01P 15/03, G01C 19/00

(54) **DISPOSITIF MÉCANIQUE DE DÉTECTION D'ACCÉLÉRATION ANGULAIRE**
MECHANISCHE VORRICHTUNG ZUR DETEKTION VON WINKELBESCHLEUNIGUNG
MECHANICAL DEVICE FOR DETECTING ANGULAR ACCELERATION

(30) Priorité: 17.01.2014 FR 1450363
(43) Date de publication de la demande: 23.11.2016
(73) Titulaire: Commissariat à l'Énergie Atomique et aux Énergies Alternatives, 75015 Paris (FR)
(72) Inventeur: BELIN, François, F-33650 La Brede (FR); AMSALEG, Sylvain, F-33470 Gujan-Mestras (FR)
(74) Mandataire: Brevalex
(86) Numéro de dépôt international: PCT/EP2015/050896
(87) Numéro de publication internationale: WO 2015/107197

(56) Documents cités:
- FR-A- 1 321 602
- US-A- 2 322 003

## Description

### DOMAINE TECHNIQUE

L'invention se rapporte au domaine technique des dispositifs de détection d'accélération angulaire. Plus précisément, l'invention concerne un dispositif destiné à détecter le dépassement d'un seuil d'accélération angulaire, conçu à partir d'éléments mécaniques.

L'invention concerne également un système de sécurité comprenant un tel dispositif, ainsi qu'un assemblage formé d'un objet d'intérêt équipé d'un tel système ou d'un tel dispositif.

### ÉTAT DE LA TECHNIQUE ANTÉRIEURE

De manière générale, il est possible de dériver la vitesse angulaire mesurée par un gyroscope, pour en déduire une accélération angulaire.

Il existe de nombreuses configurations différentes de gyroscopes. Les gyroscopes sont utilisés dans des domaines techniques aussi divers que l'industrie automobile, l'industrie de la téléphonie, la fabrication d'équipements numériques.

Des terminaux de poche, généralement plus connus sous le nom de « *smartphones* », comprennent par exemple des gyroscopes permettant de détecter un changement d'orientation d'un écran du terminal et de modifier en conséquence l'affichage de l'écran. Par ailleurs, de tels dispositifs peuvent être configurés pour détecter une chute du terminal et arrêter un disque dur du terminal avant un impact.

Parmi ces gyroscopes, beaucoup reposent sur des microsystèmes électromécaniques, également qualifiés de « MEMS », de l'anglais *« Microelectromechanical systems ».*

De manière connue, les microsystèmes électromécaniques comprennent une pluralité d'éléments mécaniques de taille micrométrique alimentés par de l'énergie électrique. Par ailleurs, ces systèmes comportent des composants microélectroniques et/ou coopèrent avec des composants microélectroniques.

Bien que les microsystèmes électromécaniques présentent l'avantage d'être de dimensions réduites, leur fabrication et/ou leur fonctionnement repose en grande partie sur des technologies microélectroniques.

De ce fait, la fiabilité des gyroscopes actuels intégrant des microsystèmes électromécaniques est susceptible d'amélioration.

En particulier, certaines applications techniques, telles que le déploiement d'éléments d'un satellite ou le positionnement correct du satellite sur son orbite, peuvent exiger une précision élevée et un faible risque de défaillance, impliquant l'utilisation de dispositifs spécifiquement dédiés à la détection d'accélération angulaire et ayant une fiabilité améliorée.

Par ailleurs, l'arrière-plan technologique de la présente invention est également illustré par le document FR 1321602 qui décrit un dispositif de commande dont l'action est simultanément fonction d'une vitesse de rotation d'un support et de la variation de cette vitesse, c'est-à-dire de l'accélération angulaire du support. Des masselottes sont montées pivotantes autour d'un axe, sur le support. Lorsque l'accélération angulaire est suffisamment importante, les masselottes pivotent autour de l'axe de sorte que la force exercée par ces masselottes agit sur des organes à commander.

### EXPOSÉ DE L'INVENTION

L'invention vise à résoudre au moins partiellement les problèmes rencontrés dans les solutions de l'art antérieur.

A cet égard, l'invention a pour objet un dispositif de détection d'accélération angulaire, le dispositif comprenant :
- un châssis présentant un axe de rotation passant par le châssis,
- un organe de sortie déplaçable par rapport au châssis, depuis une position de non détection vers une position de détection distincte de la position de non détection,
- des moyens mobiles coopérant mécaniquement avec le châssis de sorte qu'un mouvement de rotation du châssis autour de l'axe de rotation induise un déplacement des moyens mobiles par rapport à au moins une partie du dispositif, depuis une première position vers une deuxième position distincte de la première position,
des premiers moyens de blocage coopérant mécaniquement avec les moyens mobiles de sorte qu'un déplacement des moyens mobiles depuis la première position jusque dans la deuxième position induise un déplacement des premiers moyens de blocage depuis une position de déblocage jusque dans une position de blocage, la position de déblocage étant une position dans laquelle les premiers moyens de blocage autorisent un déplacement de l'organe de sortie depuis la position de non détection vers la position de détection, et la position de blocage étant une position dans laquelle les premiers moyens de blocage empêchent un déplacement de l'organe de sortie depuis la position de non détection vers la position de détection,
- des deuxièmes moyens de blocage déplaçables sous l'effet d'une force centrifuge induite par le mouvement de rotation du châssis, depuis une position de rétention jusque dans une position de libération, la position de rétention étant une position dans laquelle les deuxièmes moyens de blocage empêchent un déplacement de l'organe de sortie depuis la position de non détection vers la position de détection, et la position de libération étant une position dans laquelle les deuxièmes moyens de blocage autorisent un déplacement de l'organe de sortie depuis la position de non détection vers la position de détection.

De plus, les moyens mobiles, et les premiers et deuxièmes moyens de blocage sont configurés de sorte qu'un déplacement de l'organe de sortie depuis la position de non détection jusque dans la position de détection signale que la vitesse du mouvement de rotation du châssis a dépassé un seuil de vitesse de rotation avant que les premiers moyens de blocage n'aient atteint la position de blocage.

Les premiers moyens de blocage coopèrent avec les moyens mobiles de manière à définir une course angulaire maximale du châssis autour de l'axe de rotation, course angulaire maximale durant laquelle l'organe de sortie peut se déplacer depuis la position de non détection jusqu'à la position de détection, et au-delà de laquelle l'organe de sortie n'est plus autorisé à quitter sa position de non détection s'il s'y trouve encore.

Les moyens mobiles permettent de repérer le déplacement angulaire du châssis autour de l'axe de rotation.

Lorsque le châssis est fixé sur un objet d'intérêt, les moyens mobiles permettent ainsi de mesurer le déplacement angulaire d'un objet d'intérêt dont il est cherché à déterminer l'accélération angulaire par rapport à un référentiel, sans que le déplacement angulaire du châssis soit nécessairement identique au déplacement angulaire de l'objet d'intérêt. Le référentiel peut être un référentiel galiléen, ou un référentiel non galiléen fixe en rotation autour de l'axe de rotation du châssis par rapport à un référentiel galiléen.

Les deuxièmes moyens de blocage sont configurés pour autoriser, sous l'effet d'une force centrifuge générée par une rotation du châssis, le déplacement de l'organe de sortie depuis la position de non détection jusqu'à la position de détection. Le fonctionnement des deuxièmes moyens de blocage est donc relié directement à une vitesse angulaire du châssis.

Le dispositif, dans lequel le déplacement de l'organe de sortie est induit par une vitesse de rotation du châssis supérieure à un seuil de vitesse de rotation pour un déplacement angulaire du châssis inférieur à une course maximale, permet donc de déterminer si une mise en rotation de cet objet à partir d'un état de repos se fait avec une accélération angulaire supérieure à un certain seuil, et cela de manière purement mécanique.

Le dispositif selon l'invention offre dons l'avantage d'une meilleure fiabilité et d'une plus grande robustesse par rapport aux dispositifs connus de détection d'accélération angulaire, notamment les microsystèmes électromécaniques. Par ailleurs, le dispositif selon l'invention est de structure simple, ce qui permet la miniaturisation éventuelle du dispositif.

L'invention peut comporter de manière facultative une ou plusieurs des caractéristiques suivantes combinées entre elles ou non.

Avantageusement, les deuxièmes moyens de blocage comprennent deux éléments de blocage ainsi que des moyens de liaison mécanique reliant l'un à l'autre les éléments de blocage, les éléments de blocage étant déplaçables chacun depuis une position respective, correspondant à la position de rétention des deuxièmes moyens de blocage, jusque dans une position respective correspondant à la position de libération des deuxièmes moyens de blocage, les moyens de liaison mécanique reliant l'un à l'autre les éléments de blocage de manière à contraindre les éléments de blocage à se déplacer de manière symétrique par rapport à l'axe de rotation du châssis.

Les deuxièmes moyens de blocage sont ainsi insensibles à toute force autre qu'une force centrifuge centrée sur l'axe de rotation du châssis, telle qu'une force d'inertie, une force électromagnétique, une force centrifuge centrée sur un axe distinct de l'axe de rotation du châssis, ou encore la force de gravitation.

Selon une caractéristique additionnelle, les éléments de blocage sont respectivement montés en rotation autour de deux pivots qui s'étendent à une distance constante de l'axe de rotation du châssis et qui sont symétriques par rapport à l'axe de rotation, les moyens de liaison mécanique comprenant deux bielles formant un parallélogramme déformable avec les éléments de blocage, les deux bielles faisant partie de deux côtés opposés du parallélogramme déformable.

Selon une particularité de réalisation, les deuxièmes moyens de blocage en position de rétention coupent la trajectoire de l'organe de sortie au cours du déplacement de l'organe de sortie depuis la position de non détection vers la position de détection.

En position de rétention, les deuxièmes moyens de blocage agissent ainsi par butée sur l'organe de sortie de manière à empêcher ce dernier de se déplacer de la position de non détection vers la position de détection, sans exercer de force de serrage susceptible de détériorer prématurément le dispositif et/ou de requérir un réglage précis des deuxièmes moyens de blocage.

Selon une forme de réalisation avantageuse, les moyens mobiles sont montés déplaçables sur le châssis, depuis la première position jusqu'à la deuxième position.

Dans ce cas, le dispositif ne requiert pas de liaison mécanique entre le châssis et le référentiel par rapport auquel le dispositif est destiné à détecter un dépassement d'accélération angulaire autour de l'axe de rotation précité.

Les moyens mobiles comprennent de préférence au moins une masselotte montée coulissante dans une glissière solidaire du châssis, la glissière étant conformée de sorte qu'un déplacement de la masselotte dans la glissière induise un éloignement ou un rapprochement de la masselotte par rapport à l'axe de rotation.

La glissière assure ainsi la coopération mécanique entre la masselotte et le châssis.

Selon une autre forme de réalisation avantageuse, le dispositif de détection d'accélération angulaire comprend des moyens de guidage de l'organe de sortie en translation selon l'axe de rotation depuis la position de non détection jusqu'à la position de détection. Du fait de la mobilité en translation de l'organe de sortie, le dispositif peut être de conception particulièrement simple.

Préférentiellement, l'organe de sortie comporte des moyens de butée, les premiers moyens de blocage étant montés en rotation sur le châssis autour de l'axe de rotation, les premiers moyens de blocage étant reliés à des moyens de couplage mécanique conçus pour convertir un déplacement des moyens mobiles depuis la première position jusqu'à la deuxième position, en un déplacement en rotation des premiers moyens de blocage par rapport au châssis depuis la position de déblocage, dans laquelle les premiers moyens de blocage sont décalés angulairement des moyens de butée, jusqu'à la position de blocage, dans laquelle les premiers moyens de blocage sont en regard des moyens de butée de sorte que ces premiers moyens de blocage s'opposent à un déplacement des moyens de butée correspondant à un déplacement de l'organe de sortie depuis la position de non détection vers la position de détection.

Dans cette configuration, les premiers moyens de blocage sont de conception simple et fiable. En position de blocage, les premiers moyens de blocage bloquent l'organe de sortie en translation le long de l'axe de rotation en engageant les moyens de butée de l'organe de sortie. Par ailleurs, ces moyens de butée ne peuvent être engagés par les premiers moyens de blocage que lorsque les moyens mobiles signalent un déplacement angulaire du châssis au moins égal à la course maximale précitée.

En variante, les premiers moyens de blocage peuvent comprendre une goupille, l'organe de sortie comprenant un évidement dans lequel la goupille est engageable.

Selon une autre particularité de réalisation, les moyens de couplage comprennent une crémaillère solidaire des moyens mobiles et s'engrenant dans une denture solidaire des premiers moyens de blocage.

Selon une caractéristique additionnelle, la denture est formée en périphérie d'un élément annulaire pourvu d'un trou au travers duquel est guidé l'organe de sortie, et un bord du trou comporte une portion en saillie vers l'axe de rotation, la portion en saille formant les premiers moyens de blocage.

Le trou de passage de l'organe de sortie permet de rendre particulièrement compact le dispositif de détection d'accélération angulaire.

Selon une autre particularité de réalisation, le dispositif de détection d'accélération angulaire comprend des moyens élastiques qui sollicitent l'organe de sortie en direction de la position de détection.

Dans ce cas, étant donné que la position d'équilibre de l'organe de sortie est la position de détection, le risque que l'organe de sortie ne se déplace pas de la position de non détection à la position de détection lors d'une accélération angulaire importante du châssis est limité. Par ailleurs, il est également possible de détecter une déficience du dispositif lorsque l'organe de sortie est en position de détection et que le châssis est immobile.

De manière avantageuse, le dispositif comprend des moyens de rappel configurés de manière à maintenir les deuxièmes moyens de blocage dans la position de rétention tant que la force centrifuge exercée sur les deuxièmes moyens de blocage est inférieure à un seuil de force centrifuge correspondant au seuil de vitesse angulaire.

Les moyens de rappel permettent de définir précisément un seuil de force centrifuge à exercer sur les deuxièmes moyens de blocage pour que les deuxièmes moyens de blocage se déplacent de la position de rétention à la position de libération. Dans ce cas, le seuil de force centrifuge dépend de préférence principalement de la raideur des moyens de rappel.

L'invention concerne également un système de sécurité comprenant un dispositif de détection d'accélération angulaire tel que défini ci-dessus, ainsi qu'un dispositif de détection de vitesse angulaire comprenant un châssis solidaire du châssis du dispositif de détection d'accélération angulaire, le dispositif de détection de vitesse angulaire comprenant en outre un élément mobile déplaçable par rapport au châssis du dispositif de détection de vitesse angulaire depuis une position initiale jusque dans une position finale, sous l'effet de la force centrifuge, et des moyens de liaison mécanique reliant ledit élément mobile à l'organe de sortie du dispositif de détection d'accélération angulaire de sorte que l'organe de sortie retienne l'élément mobile dans sa position initiale lorsque l'organe de sortie est dans sa position de non détection, et de sorte que l'organe de sortie libère l'élément mobile lorsque l'organe de sortie est dans sa position de non détection.

Le système de sécurité permet donc de détecter dans un premier temps si un seuil d'accélération angulaire a été atteint par un objet d'intérêt avant de déterminer si la vitesse angulaire de l'objet d'intérêt dépasse un seuil de vitesse angulaire.

L'invention se rapporte enfin à un assemblage, comprenant un satellite, une éolienne ou un trépan de forage, l'assemblage comprenant un élément rotatif et un dispositif de détection d'accélération angulaire tel que défini ci-dessus, le châssis du dispositif étant fixé à l'objet d'intérêt de sorte que l'axe de rotation de l'objet d'intérêt soit confondu avec l'axe de rotation du châssis.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe longitudinale d'un système de sécurité comprenant un dispositif de détection d'accélération angulaire, selon un premier mode de réalisation de l'invention, dans lequel l'organe de sortie du dispositif est en position de non détection ;
- la figure 2 est une vue schématique partielle en coupe transversale selon le plan II de la figure 1, du dispositif de détection d'accélération angulaire de la figure 1, dans lequel l'organe de sortie est en position de non détection ;
- la figure 3 est une vue semblable à la figure 2, dans laquelle l'organe de sortie est en position de détection ;
- les figures 4a et 4b représentent deux vues schématiques partielles en coupe transversale des premiers moyens de blocage du dispositif de la figure 1, respectivement en position de déblocage et de blocage ;
- la figure 5 est une vue schématique en coupe longitudinale du système de la figure 1, dans lequel l'organe de sortie est en position de détection ;
- les figures 6 et 7 illustrent l'évolution en fonction du temps de la position angulaire des éléments de blocage du système de la figure 1 et de l'élément annulaire du système de la figure 1 ;
- les figures 8 à 11 sont des vues schématiques partielles en coupe longitudinale de variantes du dispositif de la figure 1 ;
- la figure 12 est une vue très schématique d'une autre variante du système de la figure 1 ;
- la figure 13 est une vue similaire à la figure 12, portant sur un deuxième mode de réalisation du système de sécurité ;
- la figure 14 est une vue semblable à la figure 13, illustrant une variante du système de la figure 13 ;
- la figure 15 est une vue schématique en perspective d'un assemblage comprenant un satellite équipé du système de la figure 1 ;
- la figure 16 est une vue schématique en perspective d'un assemblage comprenant un trépan de forage équipé du système de la figure 1 ;
- la figure 17 est une vue schématique en perspective d'un assemblage comprenant une éolienne équipée du système de la figure 1.

### EXPOSÉ DÉTAILLÉ DE MODES DE RÉALISATION PRÉFÉRÉS

Des parties identiques, similaires ou équivalentes des différentes figures portent les mêmes références numériques de façon à faciliter le passage d'une figure à l'autre.

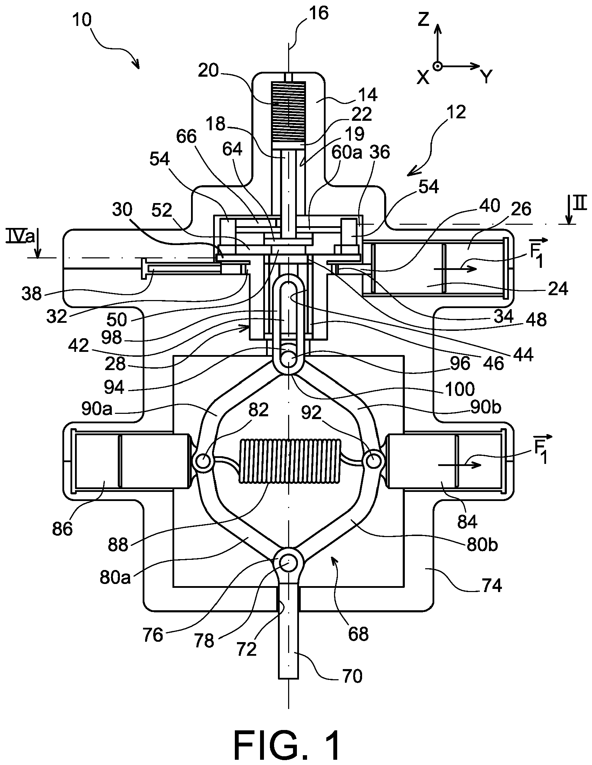

Les figures 1 à 5 représentent un système de sécurité 10 comprenant un dispositif 12 selon un premier mode de réalisation préféré de l'invention.

Ce dispositif 12 est destiné à être monté sur un objet d'intérêt afin de déterminer si une mise en rotation de cet objet à partir d'un état de repos se fait avec une accélération angulaire supérieure à un certain seuil, comme cela apparaîtra plus clairement dans ce qui suit. Par commodité, le dispositif 12 est appelé « dispositif de détection d'accélération angulaire » dans la présente description.

Ce dispositif 12 comporte un châssis 14 (figure 1) destiné à être fixé sur l'objet d'intérêt et présentant un axe de rotation 16 passant par le châssis 14 et destiné à constituer l'axe autour duquel une accélération angulaire de l'objet d'intérêt est à surveiller.

Dans ce qui suit, la direction verticale Z est définie comme étant la direction de l'axe de rotation 16, et les directions X et Y sont définies comme étant des directions orthogonales à la direction verticale Z et orthogonales l'une à l'autre. De plus, la direction radiale est définie par référence à l'axe de rotation 16, les expressions « radialement vers l'intérieur» et « radialement vers l'extérieur» désignent respectivement « en direction de l'axe de rotation 16 » et « dans la direction opposée à l'axe de rotation 16 ».

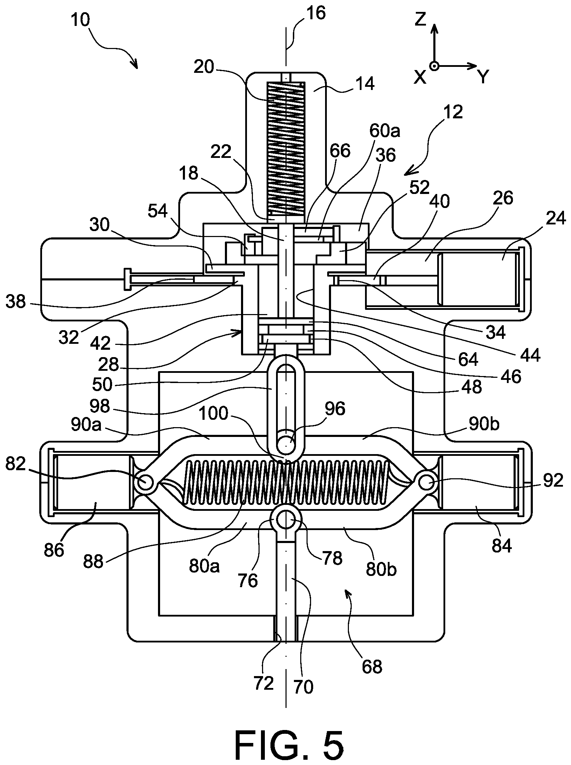

Le dispositif 12 comporte un organe de sortie 18 prenant par exemple globalement la forme d'une tige s'étendant suivant l'axe de rotation 16. Cet organe de sortie 18 est déplaçable par rapport au châssis 14, depuis une position de non détection visible sur la figure 1, vers une position de détection visible sur la figure 5 et distincte de la position de non détection.

Dans l'exemple illustré, l'organe de sortie 18 est monté coulissant selon l'axe de rotation 16, dans une glissière 19 formée d'un évidement ménagé dans le châssis 14. Comme l'illustrent les figures 1 et 5, la glissière 19 participe au guidage de l'organe de sortie 18 au cours de son déplacement depuis la position de non détection vers la position de détection. Le dispositif 12 comporte en outre des moyens élastiques, tels qu'un ressort de compression 20, qui sollicitent une tête d'extrémité 22 de l'organe de sortie 18 selon la direction verticale Z dans le sens des côtes décroissantes, et plus généralement dans la direction allant de la position de non détection vers la position de détection. Dans l'exemple illustré, le guidage de l'organe de sortie 18 le long de la glissière 19 est assuré par un contact entre une surface latérale de la tête d'extrémité 22 de l'organe de sortie et une surface du châssis délimitant la glissière 19, ces deux surfaces ayant des sections transversales respectives de formes complémentaires.

L'organe de sortie 18 est bloqué en rotation autour de l'axe 16 par des moyens qui seront décrits dans ce qui suit.

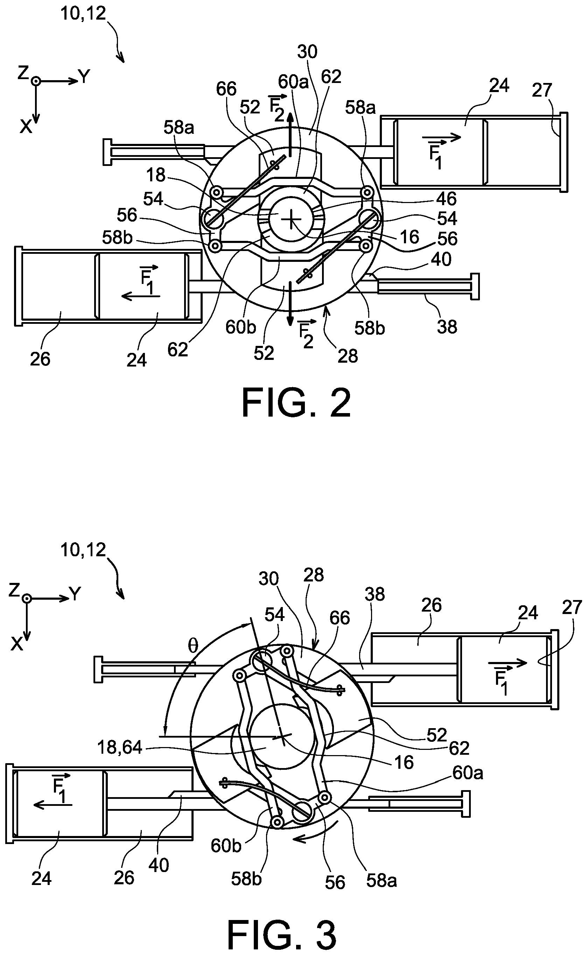

Par ailleurs, le dispositif 12 comporte deux masselottes 24, visibles sur la figure 2, et dont l'une est visible sur la figure 1 tandis que l'autre est masquée sur cette même figure. Ces masselottes 24 sont respectivement montées dans deux glissières 26 prenant la forme d'évidements ménagés dans le châssis 14 et s'étendant orthogonalement à l'axe de rotation 16, par exemple selon la direction Y. Chaque masselotte 24 est déplaçable en coulissement selon la direction Y au sein de la glissière 26 correspondante, entre une première position illustrée sur les figures 1 et 2, et une deuxième position illustrée sur les figures 3 et 5 dans laquelle la masselotte est en butée contre un fond 27 de la glissière 26. Il est à noter que dans le premier mode de réalisation de l'invention, chaque glissière 26 est solidaire du châssis 14 et permet un déplacement de la masselotte 24 correspondante par rapport à ce châssis. Comme le montrent les figures 1, 2, 3 et 5, le déplacement de chaque masselotte 24 de la première position vers la deuxième position induit un éloignement de chaque masselotte par rapport à l'axe de rotation 16, et inversement.

Lorsque le châssis 14 se déplace en rotation autour de l'axe de rotation 16 par rapport à un référentiel d'intérêt, qui peut être un référentiel galiléen ou un référentiel non galiléen fixe en rotation autour de l'axe 16 par rapport à un référentiel galiléen, les masselottes 24 subissent une force centrifuge F1 qui pousse les masselottes 24 à s'éloigner de l'axe de rotation 16 et donc à se déplacer le long des glissières 26 en direction de leur deuxième position.

Les masselottes 24 forment ainsi des moyens mobiles coopérant mécaniquement avec le châssis 14 de sorte qu'un mouvement de rotation du châssis 14 autour de l'axe de rotation 16 induise un déplacement de ces moyens mobiles par rapport à au moins une partie du dispositif 12, depuis la première position vers la deuxième position. Dans le premier mode de réalisation de l'invention, la partie du dispositif 12 par rapport à laquelle les moyens mobiles se déplacent est constituée par le châssis 14 lui-même.

Le dispositif 12 comporte un élément annulaire 28 prenant par exemple la forme d'un tube centré sur l'axe de rotation 16 et pourvu d'un flasque 30 à l'une de ses extrémités, par exemple l'extrémité située du côté des côtes croissantes sur la figure 1. L'élément annulaire 28 est également pourvu d'une collerette 32 agencée à une côte verticale inférieure à celle du flasque 30 (figure 1) et pourvue d'une denture 34. L'élément annulaire 28 est monté à rotation dans un évidement 36 du châssis 14.

Les masselottes 24 sont respectivement reliées fixement à des tiges 38 portant des crémaillères 40 respectives qui s'engrènent dans la denture 34 de l'élément annulaire 28.

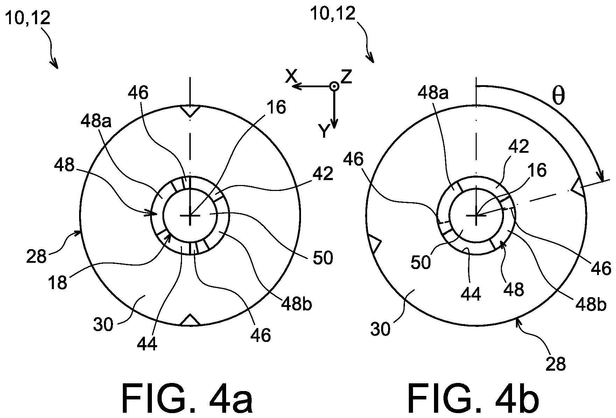

Ainsi, un déplacement des masselottes 24 depuis leur première position (figure 1) jusque dans leur deuxième position (figure 5) induit un déplacement en rotation de l'élément annulaire 28 depuis une position angulaire initiale, illustrée sur les figures 2 et 4a, jusque dans une position angulaire finale, illustrée sur les figures 3 et 4b.

De plus, l'élément annulaire 28 assure ainsi une synchronisation des déplacements respectifs des masselottes 24. Dans l'exemple illustré, dans lequel les masselottes 24 sont montées de manière symétrique par rapport à l'axe de rotation 16, une telle synchronisation permet de rendre ces masselottes 24 insensibles à toute force autre qu'une force centrifuge centrée sur l'axe de rotation 16, telle qu'une force d'inertie, une force électromagnétique, une force centrifuge centrée sur un axe distinct de l'axe 16, ou encore la force de gravitation.

Par ailleurs, l'élément annulaire 28 présente un trou 42 ou alésage délimité par une surface annulaire radialement interne de l'élément annulaire 28, cette surface formant un bord 44 du trou 42. L'élément annulaire 28 présente deux cannelures 46 diamétralement opposées (figure 4a), formées en saillie radialement vers l'intérieur depuis le bord 44 du trou 42 et s'étendant selon la direction verticale. Ces deux cannelures 46 forment des portions du bord 44 du trou 42 qui s'étendent en saillie vers l'axe de rotation 16, dans la terminologie de l'invention.

L'organe de sortie 18 comporte des moyens de butée 48 formés en saillie radialement vers l'extérieur sur la périphérie d'une collerette 50 de l'organe de sortie 18 agencée à une côte verticale plus élevée que les cannelures 46 de l'élément annulaire 28, lorsque l'organe de sortie 18 est dans sa position de non détection (figure 1). Ces moyens de butée 48 prennent par exemple la forme de deux secteurs annulaires de collerette diamétralement opposés 48a et 48b (figures 4a et 4b).

Les cannelures 46 et les moyens de butée 48 sont agencés de sorte que lorsque l'élément annulaire 28 est dans sa position initiale (figures 1, 2 et 4a), les cannelures 46 sont dans une position de déblocage dans laquelle ces cannelures sont décalées angulairement par rapport aux moyens de butée 48 et autorisent donc un déplacement de l'organe de sortie 18 depuis sa position de non détection (figure 1) vers sa position de détection (figure 5), tandis que lorsque l'élément annulaire 28 est dans sa position finale (figures 3, 4b et 5), les cannelures 46 sont dans une position de blocage dans laquelle ces cannelures sont alignées angulairement avec les moyens de butée 48 et constituent des butées vis-à-vis des moyens de butée 48. Les cannelures 46 interdisent alors à l'organe de sortie 18 de se déplacer depuis sa position de non détection vers sa position de détection.

Dans la terminologie de l'invention, les cannelures 46 forment ainsi des premiers moyens de blocage reliés mécaniquement aux moyens mobiles 24 de sorte qu'un déplacement des moyens mobiles depuis leur première position jusque dans leur deuxième position induise un déplacement des premiers moyens de blocage depuis la position de déblocage jusque dans la position de blocage. De plus, la denture 34 de l'élément annulaire 28 et les crémaillères 40 forment des moyens de couplage mécanique permettant de convertir un déplacement des moyens mobiles 24 depuis leur première position jusqu'à leur deuxième position, en un déplacement en rotation des premiers moyens de blocage 46 par rapport au châssis 14 depuis la position de déblocage jusque dans la position de blocage.

Il est à noter que dans l'exemple illustré, les moyens de butée 48 en forme de secteurs annulaires de collerette coulissent dans le bord 44 du trou 42 de l'élément annulaire 28 lorsque l'organe de sortie 18 se déplace de sa position de non détection vers sa position de détection, de sorte que ces moyens de butée 48 participent au guidage de l'organe de sortie 18 en translation selon l'axe de rotation 16.

Par ailleurs, comme cela apparaîtra plus clairement dans ce qui suit, le dispositif 12 comporte des deuxièmes moyens de blocage déplaçables sous l'effet d'une force centrifuge F2 induite par le mouvement de rotation du châssis 14 autour de l'axe 16, depuis une position de rétention illustrée sur la figure 2, jusque dans une position de libération illustrée sur la figure 3, la position de rétention étant une position dans laquelle les deuxièmes moyens de blocage empêchent un déplacement de l'organe de sortie 18 depuis sa position de non détection vers sa position de détection, et la position de libération étant une position dans laquelle les deuxièmes moyens de blocage autorisent un tel déplacement de l'organe de sortie 18.

Dans le premier mode de réalisation de l'invention, les deuxièmes moyens de blocage comprennent deux éléments de blocage 52 (figure 2) qui sont de même conformation, et qui sont respectivement montés pivotants sur deux pivots 54. Les deux pivots 54 sont fixés sur le flasque 30 de l'élément annulaire 28 et agencés symétriquement par rapport à l'axe de rotation 16. Les deux pivots 54 étant fixés sur le flasque 30, il est clair que chacun de ces pivots s'étend à une distance constante de l'axe de rotation 16, en particulier au cours d'un déplacement en rotation de l'élément annulaire 28.

Chacun des éléments de blocage 52 comporte un bras 56 comprenant une partie médiane articulée sur le pivot 54, et deux extrémités opposées 58a et 58b s'étendant de part et d'autre du pivot 54.

Les deuxièmes moyens de blocage comprennent en outre des moyens de liaison mécanique reliant l'un à l'autre les éléments de blocage 52 de manière à contraindre ces éléments de blocage à se déplacer de manière symétrique par rapport à l'axe de rotation 16 du châssis 14. Par « déplacement symétrique », il faut comprendre que les deux éléments de blocage 52 s'étendent symétriquement par rapport à l'axe de rotation 16 et se déplacent de manière synchronisée.

A cet effet, dans l'exemple illustré, les moyens de liaison mécanique comprennent une première bielle 60a présentant des extrémités opposées articulées respectivement aux extrémités 58a des bras 56 respectifs des éléments de blocage 52, ainsi qu'une seconde bielle 60b présentant des extrémités opposées articulées respectivement aux extrémités 58b des bras 56 respectifs des éléments de blocage 52. Les deux bielles 60a, 60b sont semblables et forment ainsi deux côtés opposés d'un parallélogramme déformable, tandis que les bras 56 respectifs des éléments de blocage 52 forment les deux autres côtés opposés de ce parallélogramme déformable.

Comme le montrent les figures 2 et 3, les deux éléments de blocage 52 sont ainsi déplaçables, chacun entre une position rapprochée de l'axe de rotation 16 (figure 2) et une position éloignée de l'axe 16 (figure 3).

Le déplacement des éléments de blocage 52 résulte de la force centrifuge F2, qui comprend une part provenant directement de la rotation du châssis 14 autour de l'axe 16, et une autre part provenant indirectement de la rotation du châssis 14 autour de l'axe 16. Cette autre part découle en effet de la rotation relative de l'élément annulaire 28 par rapport au châssis 14, qui résulte de l'entraînement des moyens mobiles 24 sous l'effet de la force centrifuge F1 précitée.

En revanche, les moyens de liaison mécanique qui relient l'un à l'autre les éléments de blocage 52 permettent de rendre ces derniers insensibles à toute force autre qu'une force centrifuge centrée sur l'axe 16.

Par ailleurs, chacun des éléments de blocage 52 comporte une butée 62, par exemple en forme de portion de cylindre, solidaire du bras 56 de l'élément de blocage, et agencée autour de l'organe de sortie 18 lorsque l'élément de blocage 52 est dans sa position rapprochée de l'axe 16 (figure 2). De plus, l'organe de sortie 18 présente une collerette 64 qui est agencée à une cote verticale supérieure à celle des butées 62 lorsque l'organe de sortie 18 est dans sa position de non détection (figure 1).

De cette manière, les butées 62 respectives des éléments de blocage 52 coupent la trajectoire suivie par la collerette 64, et donc plus généralement par l'organe de sortie 18, au cours d'un déplacement de l'organe de sortie 18 depuis la position de non détection vers la position de détection, lorsque les éléments de blocage 52 sont dans leur position rapprochée de l'axe 16 (figures 1 et 2). Cette position des éléments de blocage 52 définit ainsi la « position de rétention » des deuxièmes moyens de blocage, dans la terminologie de l'invention. Dans cette position en effet, les éléments de blocage 52 s'opposent à un déplacement de l'organe de sortie 18 depuis sa position de non détection vers sa position de détection.

En revanche, lorsque les éléments de blocage 52 sont dans leur position éloignée de l'axe 16 (figures 3 et 5), les butées 62 ne coupent plus la trajectoire de la collerette 64 de l'organe de sortie 18. Cette position des éléments de blocage 52 définit ainsi la « position de libération » des deuxièmes moyens de blocage, dans la terminologie de l'invention. Dans cette position en effet, les deuxièmes moyens de blocage autorisent le déplacement de l'organe de sortie 18 depuis sa position de non détection vers sa position de détection.

Pour des raisons de clarté, la collerette 64 est masquée sur la figure 2 de manière à laisser apparaître les butées 62 et les cannelures 46 qui se situent à une cote verticale inférieure à celle de la collerette 64.

Dans l'exemple illustré, le dispositif 12 comprend en outre des moyens de rappel, tels que deux ressorts à lame 66 reliant respectivement chaque pivot 54 à l'élément de blocage 52 correspondant (figure 2), de manière à maintenir les deuxièmes moyens de blocage dans la position de rétention (figure 2) tant que la force centrifuge F2 est inférieure à un seuil de force centrifuge. Les moyens de rappel exercent en effet sur les éléments de blocage 52 une force qui s'oppose à la force centrifuge F2 et qui définit ainsi le seuil de force centrifuge au-dessous duquel les éléments de blocage 52 demeurent immobiles dans leur position rapprochée de l'axe 16.

Le dispositif de détection d'accélération angulaire 12 décrit ci-dessus fonctionne de la manière suivante.

Lors d'une mise en rotation du châssis 14 autour de l'axe de rotation 16, les masselottes 24 se déplacent de leur première position (figure 1) vers leur deuxième position (figure 5) sous l'effet de la force centrifuge F1, entraînant ainsi un déplacement en rotation de l'élément annulaire 28 depuis sa position initiale, correspondant à la position de déblocage des premiers moyens de blocage (figures 2 et 4a), vers sa position finale correspondant à la position de blocage des premiers moyens de blocage (figures 3 et 4b). Les deuxièmes moyens de blocage formés par les éléments de blocage 52, initialement dans leur position de rétention (figure 2), sont alors soumis à la force centrifuge F2 qui s'oppose à la force exercée par les ressorts à lame 66.

Lorsque le déplacement en rotation de l'élément annulaire 28 atteint un seuil de vitesse angulaire correspondant à la vitesse angulaire à laquelle la force centrifuge F2 surpasse la force exercée par les ressorts à lame 66, les deuxièmes moyens de blocage formés par les éléments de blocage 52 se déplacent en direction de leur position de libération (figure 3).

Si ce seuil de vitesse angulaire est atteint avant que l'élément annulaire 28 a atteint sa position finale correspondant à la position de blocage des premiers moyens de blocage (figures 3 et 4b), l'organe de sortie 18 se déplace jusque dans sa position de détection sous l'effet de la poussée du ressort de compression 20.

En revanche, si l'élément annulaire 28 atteint sa position finale correspondant à la position de blocage des premiers moyens de blocage avant que le seuil de vitesse angulaire ne soit atteint par l'élément annulaire 28, l'organe de sortie 18 se trouve définitivement bloqué par les premiers moyens de blocage et demeure ainsi dans sa position de non détection.

Le déplacement de l'organe de sortie 18 s'observe donc uniquement dans le cas d'une mise en rotation de l'élément annulaire 28 avec une accélération angulaire supérieure à un certain seuil. Ce seuil d'accélération correspond de préférence à un cas d'accélération constante de l'élément annulaire 28 depuis sa position initiale jusqu'à sa position finale. Le seuil d'accélération angulaire est atteint lorsque le châssis 14 atteint lui-même un seuil d'accélération angulaire.

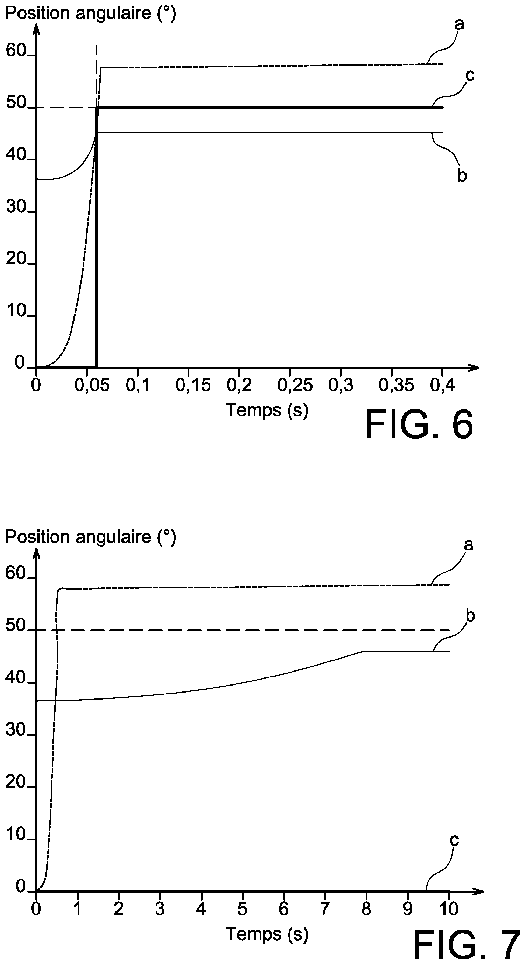

L'évolution de la position angulaire des éléments de blocage 52 et de l'élément annulaire 28 en fonction du temps sont représentés figure 6 et figure 7 dans deux exemples conformément au premier mode de réalisation.

Dans ces deux exemples, les éléments de blocage 52 sont réalisés en tantale et présentent une longueur d'environ 10 mm, pour une masse sensiblement égale à 5,3 grammes. La longueur des moyens de rappel 66 au repos est d'environ 30 mm. Le moment d'inertie des éléments de blocage 52 vaut 4,78*10⁻⁶kg. m². La distance des pivots 54 à l'axe 16 est d'environ 50 mm. L'élément annulaire 28 tourne d'un angle θ sensiblement égal à 50° avant que les premiers moyens de blocage 46 n'arrivent en position de blocage. La raideur de chacun des moyens de rappel 66 vaut environ 0.2769 N.m.rad⁻¹.

A la figure 6, l'accélération angulaire ψₛ du châssis 14 vaut environ 1000 rad.s⁻², tandis que la vitesse angulaire finale ωₛ du châssis 14 vaut 10 tours par seconde. A la figure 6, l'accélération angulaire ψₛ du châssis 14 vaut environ 12 rad.s⁻², tandis que la vitesse angulaire finale ωₛ du châssis 14 vaut 100 tours par seconde.

En référence à ces deux figures, la courbe « a » représente l'évolution de la position angulaire de l'élément annulaire 28 par rapport au châssis 14 en fonction du temps. La courbe « b » illustre l'évolution de la position angulaire des éléments de blocage 52 autour de leurs pivots 54 respectifs en fonction du temps. La courbe « c » représente schématiquement la position de détection ou de non détection de l'organe de sortie 18, en fonction du temps. Plus précisément, la courbe « c » est égale à 0 lorsque l'organe de sortie 18 est en position de non détection, et égale à 50 lorsque l'organe de sortie 18 est en position de détection.

L'accélération mesurée par le dispositif 12 de détection d'accélération angulaire à la figure 6 est supérieure au seuil d'accélération. L'organe de sortie 18 se déplace donc en position de détection, lorsque les éléments de blocage 52 libèrent l'organe de sortie 18 avant que les premiers moyens de blocage 46 arrivent en position de blocage.

A l'inverse, l'accélération mesurée par le dispositif 12 de détection d'accélération angulaire à la figure 7 est inférieure au seuil d'accélération. Les éléments de blocage 52 ne libèrent pas l'organe de sortie 18 avant que les premiers moyens de blocage 46 arrivent en position de blocage. L'organe de sortie 18 reste par conséquent en position de non détection.

La position de non détections ou de détection de l'organe de sortie 18 permet ainsi de vérifier que l'accélération du châssis 14 est supérieure à un seuil d'accélération lors d'une mise en rotation du dispositif.

Le système de sécurité 10 des figures 1 à 5 comporte en outre un dispositif 68 destiné à déterminer si la rotation de l'objet d'intérêt s'effectue à une vitesse angulaire dépassant un seuil de vitesse angulaire prédéfini. Par commodité, le dispositif 68 est appelé « dispositif de détection de vitesse angulaire » dans la présente description.

Le dispositif 68 comporte un châssis qui, dans l'exemple illustré, est constitué par le châssis 14 du dispositif 12 de détection d'accélération angulaire. Le châssis 14 forme ainsi un châssis du système de sécurité 10.

Le dispositif 68 comporte en outre un élément mobile 70, prenant par exemple la forme d'un doigt monté coulissant au travers d'un orifice 72 traversant une paroi 74 du châssis 14. L'orifice 72 est par exemple centré sur l'axe de rotation 16. L'élément mobile 70 présente une extrémité supérieure 76 articulée à des extrémités inférieures 78 respectives de deux bielles 80a, 80b de même conformation. Ces bielles 80a, 80b présentent des extrémités supérieures respectives 82 articulées respectivement à deux masselottes 84 semblables l'une à l'autre. Les masselottes 84 sont respectivement montées dans deux glissières 86 prenant la forme d'évidements ménagés dans le châssis 14 et s'étendant orthogonalement à l'axe de rotation 16, par exemple selon la direction Y, et de manière symétrique par rapport à l'axe 16. Chaque masselotte 84 est ainsi déplaçable en coulissement selon la direction Y au sein de la glissière 86 correspondante, entre une position rapprochée de l'axe 16, illustrée sur la figure 1, et une position éloignée de l'axe 16, illustrée sur la figure 5.

Il est à noter que les deux bielles 80a, 80b contraignent les masselottes à se déplacer de manière synchronisée, symétriquement par rapport à l'axe 16.

De ce fait, le déplacement des masselottes 84 est provoqué par la force centrifuge F1, et ne peut être induit par une autre force.

Par ailleurs, le dispositif 68 comporte un moyen de rappel, tel qu'un ressort de traction 88, dont deux extrémités opposées sont respectivement reliées aux deux masselottes 84.

Ainsi, le déplacement des masselottes 84, depuis leur position rapprochée de l'axe 16 vers leur position éloignée de l'axe 16, n'a lieu que si la force centrifuge F1 appliquée aux masselottes 84 surpasse une force de rappel induite par le ressort de traction 88.

En outre, le dispositif 68 comporte deux autres bielles 90a, 90b qui présentent des extrémités inférieures respectives 92 articulées respectivement aux masselottes 84 et aux extrémités supérieures des bielles 80a et 80b, et des extrémités supérieures respectives 94 articulées autour d'un pivot 96 qui coopère avec l'organe de sortie 18 du dispositif 12 de détection d'accélération angulaire.

A cet effet, l'organe de sortie 18 du dispositif 12 comporte une partie d'extrémité inférieure prenant par exemple la forme d'une coulisse 98 allongée selon la direction verticale Z et s'étendant à une cote verticale inférieure à celle des moyens de butée 48 et donc de la collerette 50 de l'organe de sortie 18. Le pivot 96 est monté à coulissement selon la direction verticale Z dans la coulisse 98.

Il est à noter que le guidage du pivot 96 au sein de la coulisse 98 permet d'empêcher l'organe de sortie 18 de se déplacer en rotation autour de l'axe 16, et permet ainsi de maintenir fixe la position angulaire des moyens de butée 48 portés par l'organe de sortie 18.

Le système de sécurité 10 fonctionne de la manière suivante.

Tant qu'une accélération angulaire du châssis 14 autour de l'axe de rotation 16 est inférieure au seuil d'accélération précité du châssis 14, l'organe de sortie 18 du dispositif 12 de détection d'accélération angulaire demeure dans sa position de non détection (figure 1).

Dans ce cas, le pivot 96 est retenu dans une position haute par une extrémité inférieure 100 de la coulisse 98, de sorte que les masselottes 84 sont retenues par les bielles 90a, 90b dans leur position rapprochée de l'axe de rotation 16, et que l'élément mobile 70 est retenu par les bielles 80a, 80b dans une position initiale basse dans laquelle cet élément mobile 70 est déployé à l'extérieur du châssis 14 au travers de l'orifice 72.

En revanche, dès que l'accélération angulaire du châssis 14 autour de l'axe de rotation 16 dépasse le seuil d'accélération précité du châssis 14, l'organe de sortie 18 se déplace jusque dans sa position de détection (figure 5).

Le pivot 96, initialement dans sa position haute, est alors libre de se déplacer vers le bas.

Un tel déplacement se produit si et seulement si la vitesse angulaire du châssis 14 atteint un seuil de vitesse angulaire correspondant à la vitesse à laquelle la force centrifuge F1 appliquée aux masselottes 84 surpasse la force de rappel induite par le ressort de traction 88. En effet, les masselottes 84 se déplacent alors vers leur position éloignée de l'axe 16, en entraînant à la fois le pivot 96 vers une position basse, et l'élément mobile 70 vers une position finale haute, dans laquelle cet élément mobile est par exemple escamoté à l'intérieur du châssis 14 (figure 5).

Ainsi, l'élément mobile 70 en position finale signale que deux conditions sont remplies : le châssis 14 s'est déplacé en rotation en atteignant un seuil de vitesse angulaire et un seuil d'accélération angulaire.

En revanche, tant que l'un de ces deux seuils n'est pas atteint, l'élément mobile 70 demeure en position basse.

Différentes modifications peuvent être apportées au système décrit ci-dessus sans sortir du cadre de l'invention.

Ainsi, le dispositif 12 de détection d'accélération angulaire peut ne comprendre qu'une seule masselotte 24, ou peut comprendre des moyens mobiles configurés différemment.

En variante, les deuxièmes moyens de blocage peuvent ne pas être montés sur l'élément annulaire 28, mais être montés directement sur le châssis 14. Dans ce cas, ces deuxièmes moyens de blocage sont soumis à la force centrifuge F1 qui dépend directement de la vitesse de rotation du châssis 14.

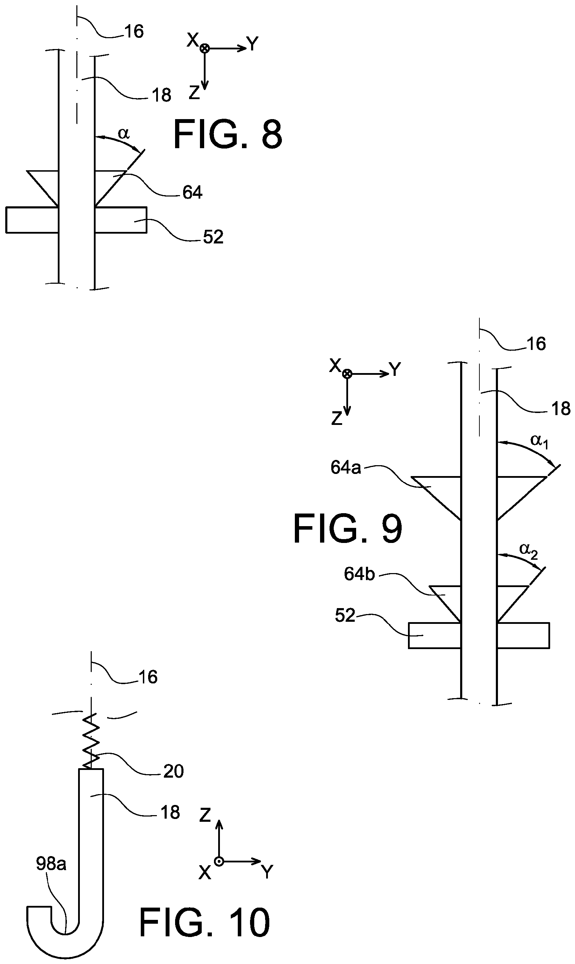

Par ailleurs, la collerette 64 de l'organe de sortie 18 peut présenter une forme tronconique à section transversale se réduisant en direction des butées 62 des deuxièmes moyens de blocage 52, c'est à dire vers les cotes verticales décroissantes (figure 8). Le contact entre la collerette 64 et les butées 62 s'effectue alors suivant une ligne circonférentielle. L'angle de conicité α est choisi de sorte que les deuxièmes moyens de blocage, prenant par exemple la forme des éléments de blocage 52, ne se déplacent pas sous la pression de la collerette 64 poussée par le ressort de compression 20 tant que les deuxièmes moyens de blocage sont dans leur position de blocage, et de sorte que la pression de la collerette 64 contribue à pousser les deuxièmes moyens de blocage vers leur position de déblocage dès que les deuxièmes moyens de blocage commencent à se déplacer depuis leur position de blocage vers leur position de déblocage sous l'effet d'une force centrifuge supérieure au seuil de force centrifuge défini par les ressorts à lame 66.

En outre, le dispositif 12 de détection d'accélération angulaire peut être conçu pour surveiller le dépassement d'une série de seuils d'accélération angulaire. Dans ce cas, le dispositif peut comprendre plusieurs groupes de deuxièmes moyens de blocage, par exemple plusieurs paires d'éléments de blocage 52, agencés les uns à la suite des autres le long de l'organe de sortie 18, et configurés de manière à se déplacer à partir de seuils de force centrifuge différents. Une telle configuration peut être obtenue par exemple en adaptant la raideur des ressorts à lame coopérant respectivement avec les différentes paires d'éléments de blocage 52, et/ou en adaptant la masse des éléments de blocage 52. En variante, la surveillance du dépassement d'une série de seuils d'accélération angulaire peut être obtenue au moyen d'un unique groupe de deuxièmes moyens de blocage coopérant successivement avec plusieurs collerettes 64a, 64b de l'organe de sortie 18 ayant respectivement des angles de conicité α1, α2... différents, comme illustré très schématiquement sur la figure 9.

Par ailleurs, le blocage en rotation de l'organe de sortie 18 peut ne pas être assuré par la coopération de cet organe avec le pivot 96 du dispositif 68 de détection de vitesse angulaire. Dans ce cas, ce blocage en rotation peut être assuré par exemple par une conformation particulière de la tête d'extrémité 22 de l'organe de sortie et de la surface du châssis délimitant la glissière 19. Ces deux éléments peuvent par exemple présenter des sections complémentaires de forme non circulaire, par exemple de forme polygonale, ou en forme de portion de cylindre pourvue d'un méplat.

Dans ce cas en particulier, l'organe de sortie 18 du dispositif 12 de détection d'accélération angulaire peut ne pas comprendre de coulisse à son extrémité coopérant avec le dispositif 68 de détection de vitesse angulaire. L'organe de sortie 18 peut alors par exemple comprendre une extrémité inférieure 98a en forme de crochet, comme illustré sur la figure 10.

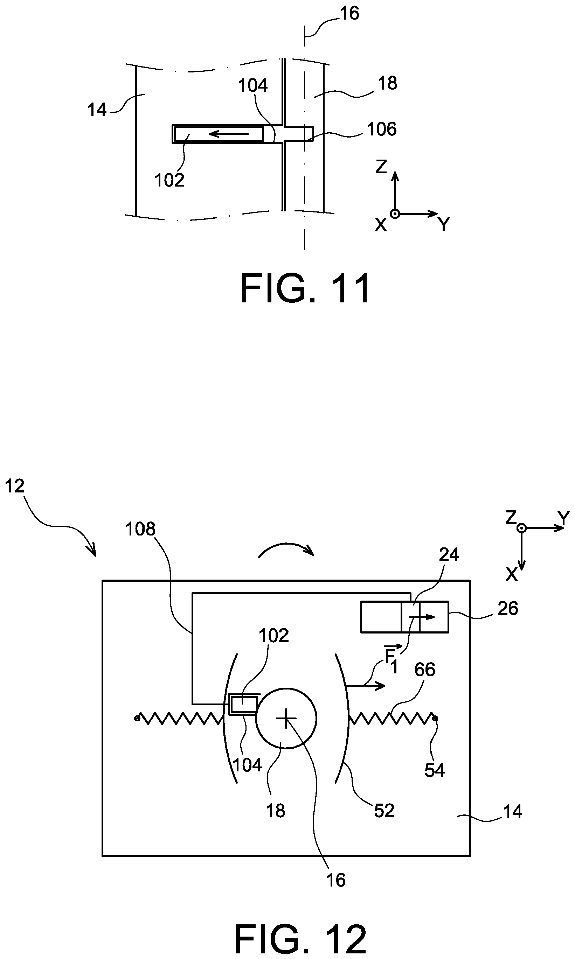

Par ailleurs, les premiers moyens de blocage et/ou les deuxièmes moyens de blocage peuvent prendre une forme différente de celle décrite ci-dessus. Ces moyens peuvent par exemple comprendre une goupille 102 montée coulissante dans une glissière 104 ménagée dans le châssis 14, ou le cas échéant, dans l'élément annulaire 28, de sorte que la goupille soit déplaçable selon une direction orthogonale à l'axe de rotation 16, entre une position éloignée de l'axe 16 dans laquelle la goupille 102 n'interagit pas avec l'organe de sortie 18, comme l'illustre très schématiquement la figure 11, et une position rapprochée de l'axe 16 dans laquelle la goupille 102 est engagée dans un orifice ou une rainure 106 de l'organe de sortie 18 de manière à bloquer ce dernier dans son déplacement entre sa position de non détection et sa position de détection.

Lorsqu'une telle goupille joue le rôle des deuxièmes moyens de blocage, la goupille 102 peut être montée libre dans sa glissière 104 de manière à se déplacer sous l'effet de la force centrifuge. De manière préférentielle, la goupille 102 est reliée à un ressort qui la rappelle dans sa position rapprochée de l'axe de rotation 16.

Lorsqu'une telle goupille joue le rôle des premiers moyens de blocage, comme dans le dispositif 12 illustré très schématiquement sur la figure 12, le dispositif comprend des moyens de couplage mécanique permettant de convertir le déplacement des moyens mobiles, tels que les masselottes 24, en un déplacement de la goupille 102 au sein de sa glissière 104. Ces moyens de couplage mécanique peuvent prendre la forme d'une liaison rigide 108 entre les moyens mobiles et la goupille 102 comme dans l'exemple illustré. En variante, ces moyens de couplage peuvent comprendre un mécanisme à base de levier qui bascule au contact des moyens mobiles lorsque ces derniers atteignent leur deuxième position, et qui pousse alors sur la goupille 102.

Il est à noter que le dispositif de la figure 12 ne comporte pas d'élément annulaire équivalent à l'élément annulaire 28 des figures 1 à 5. La fonction des premiers moyens de blocage est en effet remplie par la goupille 102, et les éléments de blocage 52 formant les deuxièmes moyens de blocage sont dans cet exemple montés directement sur le châssis 14.

D'une manière générale, les moyens élastiques qui sollicitent l'organe de sortie 18 vers sa position de détection peuvent être d'un type différent de ce qui a été décrit ci-dessus, par exemple un ressort de traction, des aimants, etc.

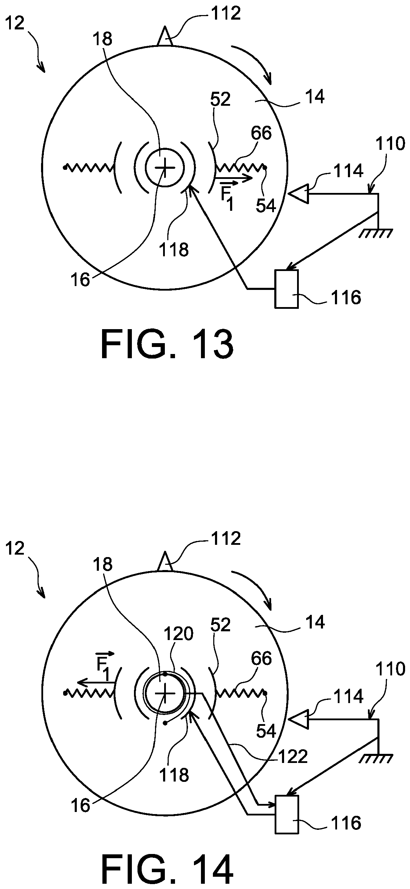

La figure 13 illustre très schématiquement un dispositif de détection d'accélération angulaire 12 selon un deuxième mode de réalisation préféré de l'invention, qui met en oeuvre le même principe général que le dispositif des figures 1 à 5, mais qui comporte une partie statique 110 liée physiquement à un point fixe d'un référentiel par rapport auquel le mouvement de rotation d'un objet d'intérêt doit être surveillé. Le châssis 14 est encore destiné à être fixé sur un objet d'intérêt tournant autour de l'axe 16 par rapport au référentiel précité. Autrement dit, la partie statique 110 est fixe par rapport à l'axe de rotation 16. De plus, l'organe de sortie 18 est par exemple guidé en coulissement selon l'axe de rotation 16 au moyen d'une glissière reliée fixement à la partie statique 110.

Dans l'exemple illustré, les moyens mobiles sont formés d'une simple protubérance 112 s'étendant en saillie sur une surface extérieure du châssis 14. Les moyens mobiles sont donc fixes par rapport à ce châssis 14. La partie statique 110 comporte un élément d'engagement 114 qui coopère par contact avec la protubérance 112, et qui agit sur des moyens de couplage 116 entraînant les premiers moyens de blocage 118. Ainsi, lors d'un déplacement en rotation de l'objet d'intérêt, les moyens mobiles 112 se déplacent en rotation autour de l'axe de rotation 16 avec le châssis 14. Les moyens de couplage 116 permettent de convertir le déplacement des moyens mobiles 112 depuis la première position angulaire représentée à la figure 13 vers une deuxième position angulaire dans laquelle les moyens mobiles 112 sont en contact avec l'élément d'engagement 114 ou interagissent avec ce dernier de toute autre manière appropriée, en un déplacement des premiers moyens de blocage 118 depuis leur position de déblocage vers leur position de blocage.

Comme l'illustre très schématiquement la figure 13, les premiers moyens de blocage 118 prennent la forme d'éléments de blocage analogues aux éléments de blocage 52 formant les deuxième moyens de blocage sur les figures 1 à 5, et fonctionnent de manière analogue à ces derniers. Ainsi, les deux éléments de blocage formant les moyens de blocage 118 sont disposés symétriquement par rapport à l'axe de rotation 16 et sont déplaçables depuis une position relativement écartée de l'axe, visible sur la figure 13, vers une position relativement rapprochée de l'axe dans laquelle ces éléments de blocage forment obstacle à un déplacement de l'organe de sortie 18 en translation. A cet effet, les éléments de blocage coopèrent par exemple avec une collerette de l'organe de sortie 18, de manière analogue à ce qui a été décrit ci-dessus en relation avec les éléments de blocage 52 du premier mode de réalisation de l'invention. De plus, les éléments de blocage sont par exemple sollicités vers leur position rapprochée de l'axe de rotation 16 au moyen de ressorts, et des moyens de retenue sont prévus pour retenir ces éléments de blocage dans leur position écartée de l'axe de rotation 16 tant que les moyens mobiles 112 ne sont pas entrés en interaction avec l'élément d'engagement 114. Les moyens de retenue prennent par exemple la forme de crochets, et les moyens de couplage 116 prennent par exemple la forme d'un mécanisme de levier basculant qui, lorsque les moyens mobiles 112 entrent en interaction avec l'élément d'engagement 114, bascule en entraînant avec lui le crochet de manière à désengager ce crochet des éléments de blocage et entraîner ainsi le déplacement des éléments de blocage vers leur position rapprochée de l'axe de rotation 16 sous l'effet de la poussée des ressorts précités.

La partie du dispositif 12 par rapport à laquelle les moyens mobiles se déplacent est donc ici constituée par la partie statique 110.

Ce dispositif peut donc être dépourvu d'élément annulaire équivalent à l'élément annulaire 28 des figures 1 à 5, comme dans l'exemple de la figure 13. Dans ce cas, les deuxièmes moyens de blocage 52 sont montés directement sur le châssis 14.

Le reste du dispositif selon ce deuxième mode de réalisation est analogue à ce qui a été décrit ci-dessus.

Ainsi, les deuxièmes moyens de blocage peuvent comprendre des éléments de blocage 52 semblables à ceux du premier mode de réalisation de l'invention, mais illustrés très schématiquement sur la figure 13. Ces éléments de blocage peuvent être sollicités vers leur position de blocage au moyen de simples ressorts de compression 66, ayant chacun une extrémité fixée au châssis 14 en un point de fixation 54 respectif.

Pour une application à un objet d'intérêt dont l'axe de rotation 16 est fixe par rapport au référentiel précité, seule la force centrifuge s'applique aux éléments de blocage 52 et il n'est donc pas nécessaire de prévoir des moyens de liaison pour rendre les éléments de blocage 52 insensibles à toute autre force comme dans le premier mode de réalisation de l'invention.

De plus, l'organe de sortie 18 peut encore être sollicité par un ressort de compression, ou par tout autre type de moyen élastique, en direction de sa position de détection, de manière analogue à ce qui a été décrit pour le premier mode de réalisation de l'invention.

En variante, le déplacement de l'organe de sortie 18 entre sa position de non détection et sa position de détection peut ne pas être une translation selon l'axe de rotation 16.

Par exemple, ce déplacement peut être une rotation autour de l'axe 16, comme sur la figure 14. Le dispositif illustré sur cette figure 14 est en effet semblable au dispositif de la figure 13, mais comporte un ressort de torsion 120 qui tend à faire tourner l'organe de sortie 18 par rapport au châssis 14, depuis une position angulaire de non détection vers une position angulaire de détection. Le dispositif 12 comporte en outre des moyens 122 permettant de détecter la position angulaire de l'organe de sortie 18 par rapport au châssis afin de signaler le dépassement éventuel du seuil d'accélération angulaire du châssis.

Le système de sécurité 10 peut être monté sur divers objets d'intérêt dont l'accélération angulaire et la vitesse angulaire doivent être surveillées au cours d'une mise en rotation de l'objet.

Le dispositif de détection d'accélération angulaire 12 peut également être utilisé seul, c'est à dire sans être couplé à un dispositif de détection de vitesse angulaire, lorsque seule l'accélération angulaire de l'objet d'intérêt est à surveiller.

Dans la terminologie de l'invention, l'ensemble formé par un objet d'intérêt d'une part, et par le système de sécurité 10 ou le dispositif de détection d'accélération angulaire 12 d'autre part, est appelé « assemblage ».

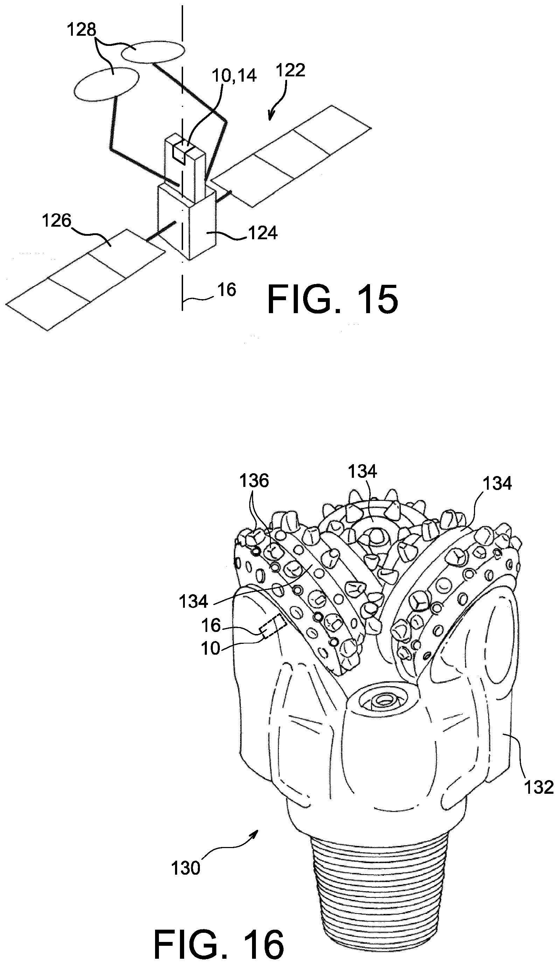

Comme l'illustre la figure 15, un tel assemblage comprend par exemple un satellite 122, comprenant un corps 124 sur lequel est fixé le châssis 14 du système de sécurité 10, ainsi que des panneaux solaires 126 et des antennes 128 montés sur le corps 124. L'élément mobile 70 du système de sécurité 10 est par exemple relié à des moyens de déploiement des panneaux solaires 126 et/ou à des moyens de déploiement des antennes 128 de manière à interdire le déploiement de ces éléments tant que les deux conditions d'accélération et de vitesse ne sont pas satisfaites en ce qui concerne la rotation du satellite 122 autour d'un axe confondu avec l'axe 16 du châssis 14.

Plus généralement, le système de sécurité 10 et le dispositif de détection d'accélération angulaire 12 peuvent équiper tout type de mobile.

De manière analogue, l'assemblage peut comprendre un trépan de forage 130 tel qu'illustré sur la figure 16. Un tel trépan comprend typiquement un tube de forage 132 et des roues dentées coniques 134 montées à rotation sur le tube de forage 132. Chaque roue dentée 134 comprend une pluralité de dents 136 qui sont fixées sur la roue dentée 134. Le châssis 14 du système de sécurité 10 est par exemple solidaire de l'une des roues dentées 134 de sorte que l'axe de rotation de la roue dentée 134 soit confondu avec l'axe de rotation 16 du châssis 14.

Le système de sécurité 10 équipant le trépan 130 peut notamment être du type décrit ci-dessus en référence aux figures 1 à 5.

En variante, le système de sécurité 10 équipant le trépan 130 peut comprendre un dispositif de détection d'accélération angulaire du type décrit ci-dessus en référence à la figure 13. Dans ce cas, la partie statique 110 du dispositif est de préférence fixe par rapport au tube de forage 132.

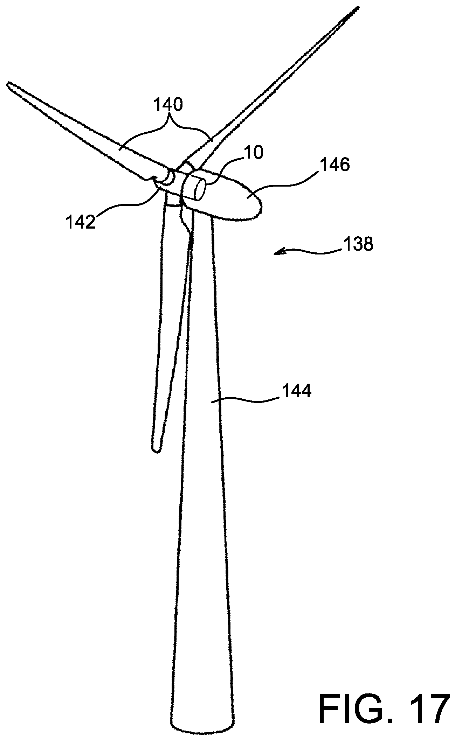

Comme l'illustre la figure 17, le système de sécurité 10 ou le dispositif de détection d'accélération angulaire 12 peut équiper une éolienne 138. Une telle éolienne comprend des pales 140 solidaires d'un rotor 142 qui se déplace en rotation par rapport à un pied 144 surmonté d'une nacelle 146 dans laquelle est monté le rotor 142. Le pied 144 et la nacelle 146 forment ainsi un stator de l'éolienne. Le châssis du système de sécurité ou du dispositif de détection d'accélération angulaire est fixé au rotor 142 de l'éolienne.

Le système de sécurité 10 équipant l'éolienne 138 peut comprendre un dispositif de détection d'accélération angulaire du type décrit ci-dessus en référence aux figures 1 à 5.

En variante, le système de sécurité 10 équipant l'éolienne 138 peut comprendre un dispositif de détection d'accélération angulaire du type décrit ci-dessus en référence à la figure 13. Dans ce cas, la partie statique 110 du dispositif est fixée au stator de l'éolienne.

Dans ce qui précède, il apparaît clairement que le système de sécurité 10 et le dispositif de détection d'accélération angulaire 12 selon l'invention présentent l'avantage d'une construction purement mécanique, de conception simple et robuste, et de faible encombrement.

## Revendications

1. Dispositif de détection d'accélération angulaire, le dispositif comprenant :
- un châssis (14) présentant un axe de rotation (16) passant par le châssis,
- un organe de sortie (18) déplaçable par rapport au châssis (14), depuis une position de non détection vers une position de détection distincte de la position de non détection,
- des moyens mobiles (24, 112) coopérant mécaniquement avec le châssis (14) de sorte qu'un mouvement de rotation du châssis (14) autour de l'axe de rotation (16) induise un déplacement des moyens mobiles par rapport à au moins une partie (14, 110) du dispositif, depuis une première position vers une deuxième position distincte de la première position,
- des premiers moyens de blocage (46, 102, 118) coopérant mécaniquement avec les moyens mobiles (24, 112) de sorte qu'un déplacement des moyens mobiles depuis la première position jusque dans la deuxième position induise un déplacement des premiers moyens de blocage depuis une position de déblocage jusque dans une position de blocage, la position de déblocage étant une position dans laquelle les premiers moyens de blocage autorisent un déplacement de l'organe de sortie (18) depuis la position de non détection vers la position de détection, et la position de blocage étant une position dans laquelle les premiers moyens de blocage empêchent un déplacement de l'organe de sortie depuis la position de non détection vers la position de détection,
- des deuxièmes moyens de blocage (52, 60a, 60b) déplaçables sous l'effet d'une force centrifuge (F2, F1) induite par le mouvement de rotation du châssis (14), depuis une position de rétention jusque dans une position de libération, la position de rétention étant une position dans laquelle les deuxièmes moyens de blocage empêchent un déplacement de l'organe de sortie (18) depuis la position de non détection vers la position de détection, et la position de libération étant une position dans laquelle les deuxièmes moyens de blocage autorisent un déplacement de l'organe de sortie depuis la position de non détection vers la position de détection,
les moyens mobiles (24, 112), et les premiers (46, 102, 118) et deuxièmes moyens de blocage (52, 60a, 60b) étant configurés de sorte qu'un déplacement de l'organe de sortie (18) depuis la position de non détection jusque dans la position de détection signale que la vitesse du mouvement de rotation du châssis (14) a dépassé un seuil de vitesse de rotation avant que les premiers moyens de blocage n'aient atteint la position de blocage.

2. Dispositif selon la revendication 1, dans lequel les deuxièmes moyens de blocage comprennent :
- deux éléments de blocage (52) déplaçables chacun depuis une position respective, correspondant à la position de rétention des deuxièmes moyens de blocage, jusque dans une position respective correspondant à la position de libération des deuxièmes moyens de blocage, ainsi que
- des moyens de liaison mécanique (60a, 60b) reliant l'un à l'autre les éléments de blocage (52) de manière à contraindre les éléments de blocage à se déplacer de manière symétrique par rapport à l'axe de rotation (16).

3. Dispositif selon la revendication 2, dans lequel les éléments de blocage (52) sont respectivement montés en rotation autour de deux pivots (54) qui s'étendent à une distance constante de l'axe de rotation (16) du châssis (14) et qui sont symétriques par rapport à l'axe de rotation, et les moyens de liaison mécanique comprennent deux bielles (60a, 60b) formant un parallélogramme déformable avec les éléments de blocage (52), les deux bielles formant deux côtés opposés du parallélogramme déformable.

4. Dispositif selon l'une quelconque des revendications précédentes, dans lequel les deuxièmes moyens de blocage (52) en position de rétention coupent la trajectoire de l'organe de sortie (18) au cours du déplacement de l'organe de sortie depuis la position de non détection vers la position de détection.

5. Dispositif selon l'une quelconque des revendications 1 à 4, dans lequel les moyens mobiles (24) sont montés sur le châssis (14) de manière à être déplaçables par rapport au châssis, depuis la première position jusqu'à la deuxième position.

6. Dispositif selon la revendication 5, dans lequel les moyens mobiles comprennent au moins une masselotte (24) montée coulissante dans une glissière (26) solidaire du châssis (14), la glissière étant conformée de sorte qu'un déplacement de la masselotte dans la glissière induise un éloignement ou un rapprochement de la masselotte par rapport à l'axe de rotation (16).

7. Dispositif selon l'une quelconque des revendications 1 à 6, comprenant des moyens (19) de guidage de l'organe de sortie (18) en translation selon l'axe de rotation (16), depuis la position de non détection jusqu'à la position de détection.

8. Dispositif selon l'une quelconque des revendications 5 et 6 prise en combinaison avec la revendication 7, dans lequel :
- l'organe de sortie (18) comporte des moyens de butée (48), et
- les premiers moyens de blocage (46) sont montés en rotation sur le châssis (14),
autour de l'axe de rotation (16), et sont reliés à des moyens de couplage mécanique (28, 34, 38, 40) conçus pour convertir un déplacement des moyens mobiles (24), depuis la première position jusqu'à la deuxième position, en un déplacement en rotation des premiers moyens de blocage (46) par rapport au châssis depuis la position de déblocage, dans laquelle les premiers moyens de blocage sont décalés angulairement des moyens de butée (48), jusqu'à la position de blocage, dans laquelle les premiers moyens de blocage sont en regard des moyens de butée de sorte que ces premiers moyens de blocage (46) s'opposent à un déplacement des moyens de butée (48) correspondant à un déplacement de l'organe de sortie (18) depuis la position de non détection vers la position de détection.

9. Dispositif selon la revendication 8, dans lequel les moyens de couplage comprennent une crémaillère (40) solidaire des moyens mobiles (24) et s'engrenant dans une denture (34) solidaire des premiers moyens de blocage (46).

10. Dispositif selon la revendication 9, dans lequel la denture (34) est formée en périphérie d'un élément annulaire (28) pourvu d'un trou (42) au travers duquel est guidé l'organe de sortie (18), et dans lequel un bord (44) du trou comporte au moins une portion en saillie (46) vers l'axe de rotation (16), la portion en saille (46) formant les premiers moyens de blocage.

11. Dispositif selon l'une quelconque des revendications 1 à 10, comprenant des moyens élastiques (20) qui sollicitent l'organe de sortie (18) en direction de la position de détection.

12. Dispositif selon l'une quelconque des revendications 1 à 11, comprenant des moyens de rappel (66) configurés de manière à maintenir les deuxièmes moyens de blocage (52, 60a, 60b) dans la position de rétention tant que la force centrifuge exercée sur les deuxièmes moyens de blocage est inférieure à un seuil de force centrifuge correspondant au seuil de vitesse.

13. Système de sécurité (10), **caractérisé en ce qu'**il comprend un dispositif de détection d'accélération angulaire (12) selon l'une quelconque des revendications 1 à 12, ainsi qu'un dispositif de détection de vitesse angulaire (68) comprenant un châssis solidaire du châssis (14) du dispositif de détection d'accélération angulaire, un élément mobile (70) déplaçable par rapport au châssis du dispositif de détection de vitesse angulaire, depuis une position initiale jusque dans une position finale, sous l'effet de la force centrifuge (F1), et des moyens de liaison mécanique (80a, 80b, 90a, 90b) reliant l'élément mobile à l'organe de sortie (18) du dispositif de détection d'accélération angulaire de sorte que l'organe de sortie (18) retienne l'élément mobile (70) dans sa position initiale lorsque l'organe de sortie (18) est dans sa position de non détection, et de sorte que l'organe de sortie (18) libère l'élément mobile (70) lorsque l'organe de sortie (18) est dans sa position de détection.

14. Assemblage, comprenant un satellite (122), une éolienne (138) ou un trépan de forage (132), l'assemblage comprenant un élément rotatif (124, 134, 142) et un dispositif (12) selon l'une quelconque des revendications 1 à 12, le châssis (14) du dispositif étant fixé à l'élément rotatif de sorte que l'axe de rotation de l'élément rotatif soit confondu avec l'axe de rotation (16) du châssis (14).

## Patentansprüche

1. Einrichtung zur Winkelbeschleunigungserfassung, wobei die Einrichtung umfasst:
- ein Gerüst (14), welches eine durch das Gerüst verlaufende Rotationsachse (16) aufweist,
- ein Ausgangselement (18), welches in Bezug zu dem Gerüst (14) von einer Nicht-Erfassungsposition zu einer Erfassungsposition verlagerbar ist, die sich von der Nicht-Erfassungsposition unterscheidet,
- bewegliche Mittel (24, 112), die derart mechanisch mit dem Gerüst (14) zusammenwirken, dass eine Rotationsbewegung des Gerüsts (14) um die Rotationsachse (16) eine Verlagerung der beweglichen Mittel in Bezug auf wenigstens einen Teil (14, 110) der Einrichtung von einer ersten Position zu einer von der ersten Position verschiedenen zweiten Position hervorruft,
- erste Sperrmittel (46, 102, 118), welche derart mechanisch mit den beweglichen Mitteln (24, 112) zusammenwirken, dass eine Verlagerung der beweglichen Mittel von der ersten Position bis in die zweite Position eine Verlagerung der ersten Sperrmittel von einer Entsperrposition bis in eine Sperrposition hervorruft, wobei die Entsperrposition eine Position ist, in welcher die ersten Sperrmittel eine Verlagerung des Ausgangselements (18) von der Nicht-Erfassungsposition zu der Erfassungspositionen zulassen, und wobei die Sperrposition eine Position ist, in welcher die ersten Sperrmittel eine Verlagerung des Ausgangselements von der Nicht-Erfassungsposition zu der Erfassungsposition verhindern,
- zweite Sperrmittel (52, 60a, 60b), die unter der Wirkung einer Zentrifugalkraft (F2, F1) verlagerbar sind, welche durch die Rotationsbewegung des Gerüsts (14) hervorgerufen wird, von einer Halteposition bis in eine Freigabeposition, wobei die Halteposition eine Position ist, in welcher die zweiten Sperrmittel eine Verlagerung des Ausgangselements (18) von der Nicht-Erfassungsposition zu der Erfassungsposition verhindern, und wobei die Freigabeposition eine Position ist, in welcher die zweiten Sperrmittel eine Verlagerung des Ausgangselements von der Nicht-Erfassungsposition zu der Erfassungsposition zulassen,
wobei die beweglichen Mittel (24, 112) und die ersten (46, 102, 118) und die zweiten Sperrmittel (52, 60a, 60b) dazu konfiguriert sind, dass eine Verlagerung des Ausgangselements (18) von der Nicht-Erfassungsposition bis in die Erfassungsposition signalisiert, dass die Rotationsbewegungsgeschwindigkeit des Gerüsts (14) einen Schwellenwert der Rotationsgeschwindigkeit überschritten hat, bevor die ersten Sperrmittel die Sperrposition erreicht haben.

2. Einrichtung nach Anspruch 1, wobei die zweiten Sperrmittel umfassen:
- zwei Sperrelemente (52), die jeweils von einer jeweiligen Position, welche der Halteposition der zweiten Sperrmittel entspricht, bis in eine jeweilige Position verlagerbar sind, die der Freigabeposition der zweiten Sperrmittel entspricht, sowie
- Mittel zur mechanischen Verbindung (60a, 60b), welche die Sperrelemente (52) so miteinander verbinden, dass die Sperrelemente darauf beschränkt sind, sich in symmetrischer Weise in Bezug auf die Rotationsachse (16) zu verlagern.

3. Einrichtung nach Anspruch 2, wobei die Sperrelemente (52) jeweils drehbar um zwei Achszapfen (54) montiert sind, die sich mit einem konstanten Abstand von der Rotationsachse (16) des Gerüsts (14) erstrecken und symmetrisch in Bezug auf die Rotationsachse sind, und wobei die Mittel zur mechanischen Verbindung zwei Verbindungsstangen (60a, 60b) umfassen, welche mit den Sperrelementen (52) ein verformbares Parallelogramm bilden, wobei die zwei Verbindungsstangen zwei einander gegenüberliegende Seiten des verformbaren Parallelogramms bilden.

4. Einrichtung nach einem der vorhergehenden Ansprüche, wobei die zweiten Sperrmittel (52) in der Halteposition die Trajektorie des Ausgangselements (18) bei der Verlagerung des Ausgangselements von der Nicht-Erfassungsposition zu der Erfassungsposition schneiden.

5. Einrichtung nach einem der Ansprüche 1 bis 4, wobei die beweglichen Mittel (24) derart an dem Gerüst (14) montiert sind, dass sie in Bezug auf das Gerüst von der ersten Position bis zu der zweiten Position verlagerbar sind.

6. Einrichtung nach Anspruch 5, wobei die beweglichen Mittel wenigstens ein Gewicht (24) umfassen, das verschiebbar auf einer fest mit dem Gerüst (14) verbundenen Schiene (26) montiert ist, wobei die Schiene so geformt ist, dass eine Verlagerung des Gewichts auf der Schiene eine Entfernung oder eine Annäherung des Gewichts in Bezug auf die Rotationsachse (16) hervorruft.

7. Einrichtung nach einem der Ansprüche 1 bis 6, umfassend Mittel (19) zur Führung des Ausgangselements (18) in einer Translation entlang der Rotationsachse (16) von der Nicht-Erfassungsposition bis zu der Erfassungsposition.

8. Einrichtung nach einem der Ansprüche 5 und 6, in Kombination mit dem Anspruch 7, wobei
- das Ausgangselement (18) Anschlagmittel (48) umfasst, und
- die ersten Sperrmittel (46) um die Rotationsachse (16) herum drehbar an dem Gerüst (14) angebracht sind und mit Mitteln zur mechanischen Kopplung (28, 34, 38, 40) verbunden sind, die dazu ausgelegt sind, eine Verlagerung der beweglichen Mittel (24) aus der ersten Position bis zu der zweiten Position umzuwandeln in eine Drehverlagerung der ersten Sperrmittel (46) in Bezug auf das Gerüst, von der Entsperrposition, in welcher die ersten Sperrmittel winkelmäßig gegenüber den Anschlagmitteln (48) versetzt sind, bis zu der Sperrposition, in welcher die ersten Sperrmittel sich gegenüber von den Anschlagmitteln befinden, so dass die ersten Sperrmittel (46) sich einer Verlagerung der Anschlagmittel (48) entsprechend einer Verlagerung des Ausgangselements (18) von der Nicht-Erfassungsposition zu der Erfassungsposition widersetzen.

9. Einrichtung nach Anspruch 8, wobei die Kopplungsmittel eine fest mit den beweglichen Mitteln (24) verbundene Zahnstange (40) umfassen und in eine Verzahnung (34) eingreifen, die fest mit den ersten Sperrmitteln (46) verbunden ist.

10. Einrichtung nach Anspruch 9, wobei die Verzahnung (34) am Umfang eines ringförmigen Elements (28) ausgebildet ist, welches mit einem Loch (42) versehen ist, durch welches das Ausgangselement (18) geführt ist, und wobei ein Rand (44) des Lochs wenigstens einen zu der Rotationsachse (16) hin vorspringenden Abschnitt (46) umfasst, wobei der vorspringende Abschnitt (46) die ersten Sperrmittel bildet.

11. Einrichtung nach einem der Ansprüche 1 bis 10, umfassend elastische Mittel (20), welche das Ausgangselement (18) in Richtung der Erfassungsposition drängen.

12. Einrichtung nach einem der Ansprüche 1 bis 11, umfassend Rückstellmittel (66), die dazu konfiguriert sind, die zweiten Sperrmittel (52, 60a, 60b) in der Halteposition zu halten, solange die auf die zweiten Sperrmittel ausgeübte Zentrifugalkraft kleiner ist als eine Schwellen-Zentrifugalkraft, die dem Geschwindigkeits-Schwellenwert entspricht.

13. Sicherheitssystem (10), **dadurch gekennzeichnet, dass** es eine Einrichtung zur Winkelbeschleunigungserfassung (12) nach einem der Ansprüche 1 bis 12 aufweist, sowie eine Einrichtung zur Winkelgeschwindigkeitserfassung (68), welche ein Gerüst, das fest mit dem Gerüst (14) der Einrichtung zur Winkelbeschleunigungserfassung verbunden ist, ein bewegliches Element (70), welches in Bezug auf das Gerüst der Winkelgeschwindigkeitserfassung verlagerbar ist, von einer Anfangsposition bis in eine Endposition, unter der Wirkung der Zentrifugalkraft (F1), und Mittel zur mechanischen Verbindung (80a, 80b, 90a, 90b) umfasst, welche das bewegliche Element mit dem Ausgangselement (18) der Einrichtung zur Winkelbeschleunigungserfassung verbinden, so dass das Ausgangselement (18) das bewegliche Element (70) in seiner Anfangsposition hält, wenn sich das Ausgangselement (18) in seiner Nicht-Erfassungsposition befindet, und so, dass das Ausgangselement (18) das bewegliche Element (70) freigibt, wenn das Ausgangselement (18) sich in seiner Erfassungsposition befindet.

14. Anordnung, umfassend einen Satelliten (122), eine Windkraftanlage (138) oder einen Bohrmeißel (132), wobei die Anordnung ein Drehelement (124, 134, 142) und eine Einrichtung (12) nach einem der Ansprüche 1 bis 12 umfasst, wobei das Gerüst (14) der Einrichtung an dem Drehelement fixiert ist, so dass die Rotationsachse des Drehelements mit der Rotationsachse (16) des Gerüsts (14) zusammenfällt.

## Claims

1. A device for detecting angular acceleration, the device including:
- a chassis (14) having a rotation axis (16) passing through the chassis,
- an output member (18) movable relative to the chassis (14), from a non-detection position toward a detection position separate from the non-detection position,
- movable means (24, 112) cooperating mechanically with the chassis (14) such that a rotational movement of the chassis (14) around the rotation axis (16) causes a movement of the movable means relative to at least part (14, 110) of the device, from a first position toward a second position separate from the first position,
- first blocking means (46, 102, 118) cooperating mechanically with the movable means (24, 112) such that a movement of the movable means from the first position to the second position causes a movement of the first blocking means from a non-blocking position to a blocking position, the non-blocking position being a position in which the first blocking means authorize a movement of the output member (18) from the non-detection position to the detection position, and the blocking position being a position in which the first blocking means prevent a movement of the output member from the non-detection position to the detection position,
- second blocking means (52, 60a, 60b) movable under the effect of a centrifugal force (F2, F1) induced by the rotational movement of the chassis (14), from a retention position to a release position, the retention position being a position in which the second blocking means prevent a movement of the output member (18) from the non-detection position toward the detection position, and the release position being a position in which the second blocking means authorize a movement of the output member from the non-detection position toward the detection position,
the movable means (24, 112), and the first (46, 102, 118) and second blocking means (52, 60a, 60b) being configured such that a movement of the output member (18) from the non-detection position to the detection position indicates that the speed of the rotational movement of the chassis (14) has exceeded a rotational speed threshold before the first blocking means have reached the blocking position.

2. The device according to claim 1, wherein the second blocking means comprise:
- two blocking elements (52) each movable from a respective position, corresponding to the retention position of the second blocking means, into a respective position corresponding to the release position of the second blocking means, as well as
- mechanical connecting means (60a, 60b) connecting the blocking elements (52) to one another so as to constrain the blocking elements to move symmetrically relative to the rotation axis (16).

3. The device according to claim 2, wherein the blocking elements (52) are respectively rotatably mounted around two pivots (54) that extend at a constant distance from the rotation axis (16) of the chassis (14) and that are symmetrical relative to the rotation axis, and the mechanical connecting means comprise two connecting rods (60a, 60b) forming a deformable parallelogram with the blocking elements (52), the two connecting rods forming two opposite sides of the deformable parallelogram.

4. The device according to any one of the preceding claims, wherein the two blocking means (52) in the retention position intersect the trajectory of the output member (18) during the movement of the output member from the non-detection position toward the detection position.

5. The device according to any one of claims 1 to 4, wherein the movable means (24) are mounted on the chassis (14) so as to be movable relative to the chassis, from the first position to the second position.

6. The device according to claim 5, wherein the movable means include at least one counterweight (24) mounted sliding in a guide (26) secured to the chassis (14), the guide being configured such that a movement of the counterweight in the guide causes the counterweight to move away from or closer to the rotation axis (16).

7. The device according to any one of claims 1 to 6, including means (19) for guiding the output member (18) in translation along the rotation axis (16), from the non-detection position to the detection position.

8. The device according to any one of claims 5 and 6 combined with claim 7, wherein:
- the output member (18) comprises stop means (48), and
- the first blocking means (46) are rotatably mounted on the chassis (14), around the rotation axis (16), and are connected to mechanical coupling means (28, 34, 38, 40) designed to convert a movement of the movable means (24), from the first position to the second position, into a rotational movement of the first blocking means (46) relative to the chassis from the unblocking position, in which the first blocking means are angularly offset from the stop means (48), to the blocking position, in which the first blocking means are opposite the stop means such that these first blocking means (46) oppose a movement of the stop means (48) corresponding to a movement of the output member (18) from the non-detection position to the detection position.

9. The device according to claim 8, wherein the coupling means include a rack (40) secured to the movable means (24) and meshing in teeth (34) secured to the first blocking means (46).

10. The device according to claim 9, wherein the teeth (34) are formed on the periphery of an annular element (28) provided with a hole (42) through which the output member (18) is guided, and in which an edge (44) of the hole comprises at least one portion (46) protruding toward the rotation axis (16), the protruding portion (46) forming the first blocking means.

11. The device according to any one of claims 1 to 10, including resilient means (20) that stress the output member (18) toward the detection position.

12. The device according to any one of claims 1 to 11, including return means (66) configured so as to keep the second blocking means (52, 60a, 60b) in the retention position as long as the centrifugal force exerted on the second blocking means is below a centrifugal force threshold corresponding to the speed threshold.

13. A security system (10), **characterized in that** it includes an angular acceleration detection device (12) according to any one of claims 1 to 12, as well as an angular speed detection device (68) including a chassis secured to the chassis (14) of the angular acceleration detection device, a movable element (70) movable relative to the chassis of the angular speed detection device, from an initial position to a final position, under the effect of the centrifugal force (F1), and mechanical connecting means (80a, 80b, 90a, 90b) connecting the movable element to the output member (18) of the angular acceleration detection device such that the output member (18) keeps the movable element (70) in its initial position when the output member (18) is in its non-detection position, and such that the output member (18) frees the movable element (70) when the output member (18) is in its detection position.

14. An assembly, including a satellite (122), a wind turbine (138) or a drilling bit (132), the assembly including a rotating element (124, 134, 142) and a device (12) according to any one of claims 1 to 12, the chassis (14) of the device being fastened to the rotating element such that the rotation axis of the rotating element coincides with the rotating axis (16) of the chassis (14).
